# EUROPÄISCHE PATENTSCHRIFT

(11) **EP 1 485 223 B1**
(45) Veröffentlichungstag und Bekanntmachung des Hinweises auf die Patenterteilung: **30.04.2014**
(21) Anmeldenummer: 03707893.8
(22) Anmeldetag: 20.03.2003
(51) Int. Cl.: B23D 47/04, B27B 5/065, B27B 5/20

(54) **PLATTENAUFTEILSÄGE**
PANEL DIVIDER SAW
SCIE DE DIVISION DE PANNEAUX

(30) Priorität: 20.03.2002 AT 17702 U
(43) Veröffentlichungstag der Anmeldung: 15.12.2004
(73) Patentinhaber: Schelling Anlagenbau GmbH, 6858 Schwarzach (AT)
(72) Erfinder: PANHANS, Anton, Karl, Hermann, 72488 Sigmaringen (DE)
(74) Vertreter: Fechner, Thomas
(86) Internationale Anmeldenummer: PCT/AT2003/000077
(87) Internationale Veröffentlichungsnummer: WO 2003/078097

(56) Entgegenhaltungen:
- EP-A- 0 249 058
- EP-A- 1 005 937
- WO-A1-00/47377
- AT-U- 1 961
- US-A- 5 893 310

## Beschreibung

Die Erfindung betrifft eine Plattenaufteilsäge wie im Oberbegriff des Anspruches 1 beschrieben. Eine solche Plattenaufteilsäge ist der WO 00473 77 zu entnehmen.

Aus dem Dokument EP 0 249 058 A1 ist ein Druckbalken für Sägemaschinen zum Schneiden von Werkstücken, wie Platten oder Paketen aus Platten, die einen Werkstücktisch mit einem geraden Längsschlitz aufweisen, der eine Schnittlinie bestimmt und mit einem entlang dieser Schnittlinie verstellbaren Sägewerkzeug versehen sind, bekannt. Der Druckbalken ist oberhalb des Werkstücktisches angeordnet und erstreckt sich über die gesamte Länge der Schnittlinie und besteht aus zwei Andrückelementen, die zu beiden Seiten der Schnittlinie parallel zu dieser angeordnet sind. Weiters ist eine Einrichtung zum Heben und Senken jedes Andrückelementes unabhängig vom anderen Andrückelement vorgesehen. Die Andrückelemente sind weiters zur Veränderung eines Abstandes zwischen diesen und damit gegenüber der zwischen ihnen verlaufenden Schnittlinie verstellbar.

Aus dem Dokument EP 1 005 937 A2 ist eine Spannvorrichtung zum Haltern und Spannen eines im Wesentlichen in einer Längsrichtung langgestreckten Werkstückes auf einem Spanntisch in einer Vorrichtung zum Ablängen und Sägen des Werkstückes, welche wenigstens eine Sägeeinrichtung mit einem Sägeblatt aufweist, bekannt. Die Vorrichtung dient zum Durchsägen des Werkstückes in einer Querrichtung zur Längserstreckung und ist zur Einstellung der Querrichtung verschwenkbar ausgebildet. Das Spannstück ist in Längsrichtung des Werkstücks horizontal verstellbar ausgebildet, wobei eine Verstelleinrichtung zum Verstellen des Spannstückes horizontal und in Längsrichtung des Werkstückes vorgesehen ist. Durch die Verstelleinrichtung wird in Abhängigkeit von einem Schnittwinkel und von einer Breite des Werkstücks eine Verstellung des Spannstücks bis in die unmittelbare Nähe des Sägeblattes der Sägeeinrichtung erreicht.

Aus der AT 001 961 U1 der selben Anmelderin ist eine Bearbeitungseinrichtung für plattenförmige Werkstücke, insbesondere eine Plattenaufteilsäge bekannt. Diese Bearbeitungseinrichtung ist mit einem, eine Auflagefläche für die Werkstücke ausbildenden Maschinengestell und mit einer Niederhalteeinrichtung zum Spannen des zwischen der Auflagefläche und einer Spannfläche eines Druckbalkens befindlichen Werkstückes und mit einem zumindest senkrecht zur Auflagefläche oder zur Spannfläche verstellbaren Bearbeitungsaggregat versehen. Mit dieser Bearbeitungseinrichtung können nunmehr plattenförmige Werkstücke, die auf einer Auflagefläche des Maschinentisches und gegen diese gespannt sind, je nach der gewählten Werkzeugbestückung der Bearbeitungseinrichtung von ihrer der Auflagefläche zugewandten Unterseite ausgehend bearbeitet werden. Nachteilig bei dieser Bearbeitungseinrichtung ist, dass die Bearbeitungsvorrichtung, die bevorzugt aus einer Sägeeinrichtung und gegebenenfalls einer Vorritzeinrichtung besteht bzw. deren Werkzeuge, wie Sägeblatt, Ritzrad, etc., in einem unveränderbar rechten Winkel zur Auflagefläche für die plattenförmigen Werkstücke ausgerichtet ist und damit sogenannte Gehrungsschnitte nicht möglich sind.

Aufgabe der Erfindung ist, eine Plattenaufteilsäge zu schaffen, mit der ohne aufwendige Einstelltätigkeit über eine Dicke von Werkstücken, gesehen winkelige Schnittführungen in einem Winkel möglich sind.

Diese Aufgabe der Erfindung wird durch die im Kennzeichenteil des Anspruches 1 wiedergegebenen Merkmale erreicht. Der überraschende Vorteil dabei ist, dass durch die Kombination des in Längsführungen verfahrbaren Laufwagens und einem in diesem verschwenkbar gelagerten Vorrichtungsträger eine Verstellmöglichkeit für Winkelschnitte geschaffen wird, wobei der der Niederhaltung der plattenförmige Werkstücke dienende Druckbalken justierbar ist und damit unabhängig von der Schrägstellung des Werkzeuges ein zu diesem symmetrisches Niederspannen des Werkstückes erreicht wird.

Vorteilhafte weiterbildungen der Erfindung sind den abhängigen Ansprüchen zu entnehmen.

Vorteilhaft ist eine Ausbildung nach Anspruch 2, wodurch eine extrem stabile Schwenklageranordnung für den mit zumindest einer Bearbeitungsvorrichtung bestückten Vorrichtungsträger erreicht wird.

Vorteilhaft ist dabei eine Ausbildung nach Anspruch 3, wodurch die durch den Bearbeitungsvorgang auftretenden Verwindungsmomente einwandfrei aufgenommen werden.

Gemäß der vorteilhaften Ausbildung wie im Anspruch 4 beschrieben, wird ein seitlicher Versatz des Werkzeuges z.B. eines Sägeblattes bei Verschwenkung des Vorrichtungsträgers in geringen Grenzen gehalten.

Von Vorteil sind Ausbildungen nach den Ansprüchen 5 und 6, wodurch Standardelemente, die sich durch besondere Langlebigkeit auszeichnen und kostengünstig erhältlich sind, zum Einsatz gelangen.

Vorteilhaft ist weiters eine Ausbildung nach Anspruch 7, um exakte Schnitt- oder Ritzlinienführungen zu erreichen.

Die in den Ansprüchen 8 bis 11 gekennzeichneten vorteilhaften Ausbildungen ermöglichen eine exakte Justierung des Druckbalkens für eine symmetrisch zum Werkzeug erfolgende Anpressung des Werkstückes auf der Auflagefläche.

Eine kostengünstige und stabile Ausbildung sowie Kombination von Führung und Verstellantrieb ermöglicht die Ausbildung nach Anspruch 12.

Gemäß der vorteilhaften Weiterbildung wie im Anspruch 13 beschrieben, werden Schnittführungen an den Werkstücken erreicht, wie sie üblicherweise für Gehrungsverbindungen erforderlich sind.

Weiters ist eine Ausbildung nach Anspruch 14 vorteilhaft, weil dadurch eine hohe Seitenstabilität und exakte Verstellvornahme bei der Justierung der Seitenwangen und damit des Druckbalkens erreicht wird.

Schließlich sind auch die Ausbildungen nach den Ansprüchen 15 und 16 vorteilhaft, wodurch die Bedienung der Bearbeitungsvorrichtung insbesondere die Abstimmung zwischen den Stellungen von Vorrichtungsträger und Querbalken vereinfacht wird und eine wirtschaftliche Bearbeitung von Werkstücken durch Erzielung kurzer Taktzeiten erreicht wird.

Zum besseren Verständnis der Erfindung wird diese anhand der in den Fig. gezeigten Ausführungsbeispielen näher erläutert.

Es zeigen:
- Fig. 1: eine erfindungsgemäße Plattenaufteilsäge in Seitenansicht, teilweise geschnitten;
- Fig. 2: eine Detailansicht der erfindungsgemäßen Fertigungseinrichtung mit dem Laufwagen und dem Vorrichtungsträger in einer ersten Stellung, teilweise geschnitten;
- Fig. 3: die Detailansicht der erfindungsgemäßen Fertigungseinrichtung mit dem Laufwagen und Vorrichtungsträger in einer zweiten, winkelig verschwenkten Stellung, teilweise geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

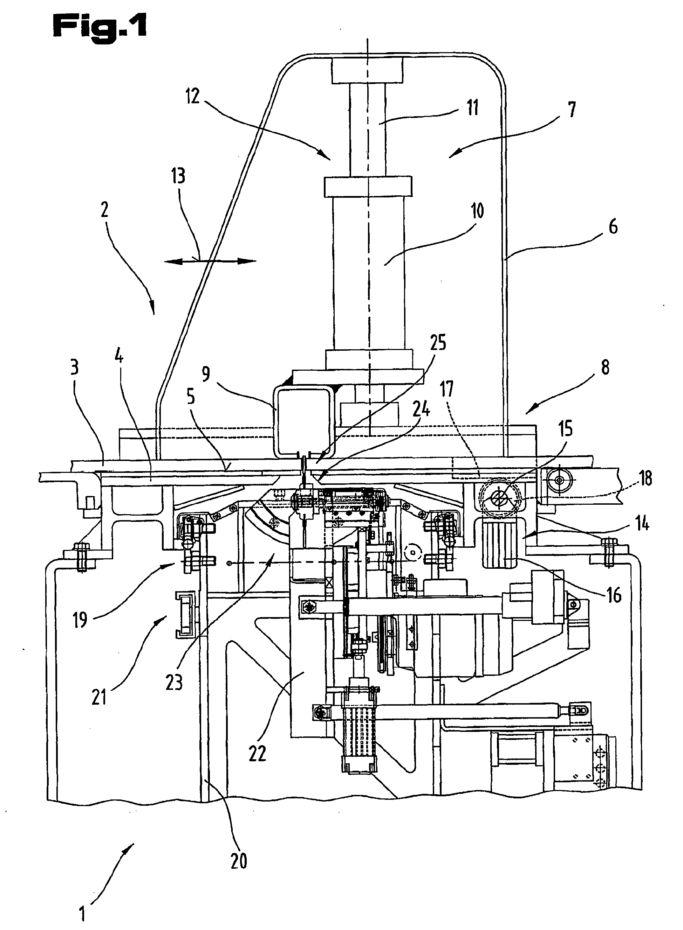

In der Fig. 1 ist eine Bearbeitungseinrichtung 1, insbesondere Plattenaufteilsäge 2, für plattenförmige Werkstücke 3 gezeigt. Ein Maschinengestell 4 bildet eine tischförmige Auflagefläche 5 für die zu bearbeitenden Werkstücke 3 aus. An gegenüberliegenden Stirnseiten des Maschinengestells 4 sind sich in senkrechter Richtung erstreckende, die Auflagefläche 5 überragende Seitenwangen 6 angeordnet. Diese lagern einen über Verstellantriebe 7 in Führungen 8 in zur Auflagefläche 5 senkrechter Richtung verstellbaren sich in Längsrichtung der Ferdgungseinrichtung 1 erstreckenden Druckbalken 9, der durch ein in etwa C-förmiges Profil gebildet ist, mit einer der Auflagefläche 5 zugewandten schlitzförmigen Öffnung zum Durchtritt eines Werkzeuges z. B. Sägeblattes. Die Verstellantriebe 7 für den Druckbalken 9 sind bevorzugt durch mit einem Druckmedium, insbesondere Druckluft, beaufschlagbare Druckzylinder 10 gebildet, mit den Zylindermantel durchragenden Kolbenstangen 11, wodurch gleichzeitig die Führungen 8 vorliegen.

Die Seitenwangen 6 sind an entgegengesetzten Endbereichen des Maschinengestell 4 über linear verlaufende Führungen 12, z.B. Gleitführungen, Rollen oder Kugelführungen, gemäß einem Doppelpfeil 13 verstellbar gelagert. Für eine synchrone Verstellung der Seitenwangen 6 ist im Maschinengestell 4 eine Antriebsanordnung 14 vorgesehen mit einer Antriebswelle 15 und einem Antriebsmotor 16 z.B. einem elektrisch betriebenen Schrittschaltmotor. Die Antriebswelle 15 ist mit Zahnstangen 17 der Seitenwangen 6 über diesen zugeordneten Zahnrädern 18 bewegungsgekuppelt. Damit wird eine synchrone Verstellung gemäß dem Doppelpfeil 13 bei Beaufschlagung der Antriebsabordnung 14 erreicht.

Weiters ist im Maschinengestell 4 in einer linearen Führungsanordnung 19 ein Laufwagen 20 über eine Vorschubvorrichtung 21 verstellbar gelagert. Der Laufwagen 20 lagert einen Vorrichtungsträger 22 mit zumindest einer darauf angeordneten Bearbeitungsvorrichtung 23, insbesondere einer Sägeeinrichtung 24. Vorteilhaft ist bei den vorgesehenen Bearbeitungsvorgängen an plattenförmigen, gegebenenfalls beschichteten Werkstücken auch eine Vorritzeinrichtung 25 am Vorrichtungsträger 22 vorzusehen. Diese Bearbeitungsvorrichtungen 23 sind nach dem Stand der Technik am Vorrichtungsträger 22 verstellbar gelagert um die Werkzeuge in bezug auf die Auflagefläche 5 einstellen zu können.

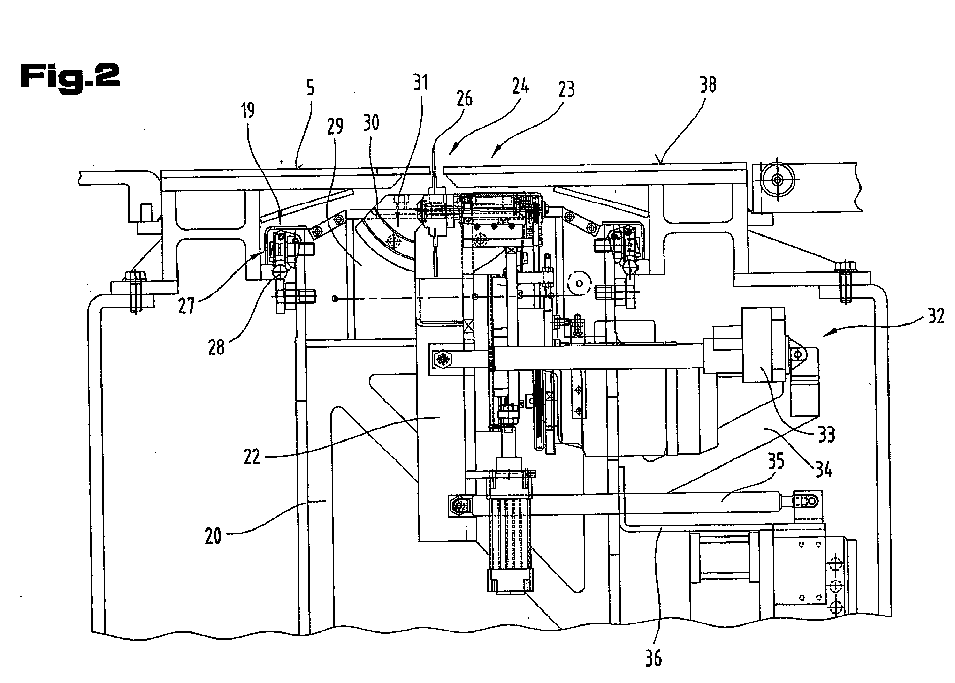

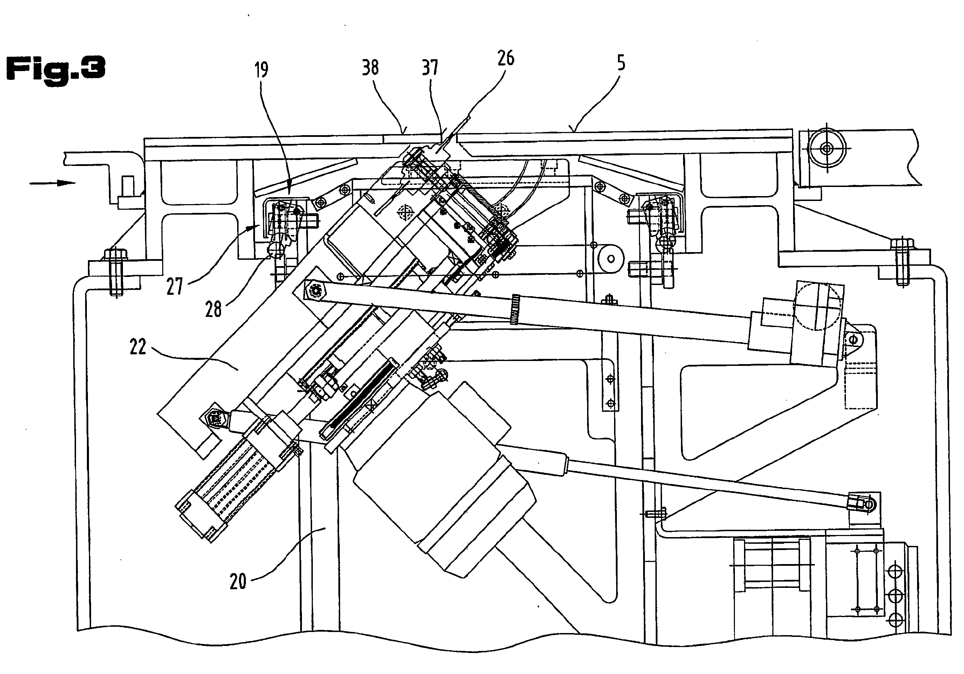

In den Fig. 2 und 3 ist nunmehr in Detailansichten der Laufwagen 20 mit dem Vorrichtungsträger 22 verschwenkt in zwei möglichen Endstellung dargestellt, bei der ein Werkzeug, z.B. ein Sägeblatt 26, zur Auflagefläche 5 in einem rechten Winkel - wie in Fig. 2 - dargestellt oder in einem Winkel von etwa 45 ° - wie in Fig. 3 - dargestellt gezeigt ist.

Der Laufwagen 20 ist über Rollenanordnungen 27 auf Führungsstangen 28 der im Maschinengestell 4 vorgesehenen Führungsanordnung 19 geführt. abgestützt. An gegenüberliegenden Stirnrahmen 29 des Laufwagens 20 sind zueinander gerichtete, kreisbogenförmige Kulissenbahnen 30 ausgebildet, die Schwenkführungen 31 für den Vorrichtungsträger 22 ausbilden. Ein Schwenkantrieb 32, z.B. ein Spindeltrieb 33, bildet den Antrieb für die Verschwenkverstellung des Vorrichtungsträgers 22 gegenüber dem Laufwagen 20. Der Spindeltrieb 33 ist einerseits mit dem Vorrichtungsträger 22 und andererseits mit einer Konsole 34 des Laufwagens 20 schwenkbar verbunden. Zur exakten Führung des Vorrichtungsträgers 22 ist weiters zum Ausgleich jeglichen Spiels des Schwenkantriebes 32 z.B. ein Druckspeicher 35 ebenfalls gelenkig zwischen dem Vorrichtungsträger 22 und einer weiteren Konsole 36 vorgesehen.

Die Ausbildung und Anordnung der Kulissenbahn 30 in der der Vorrichtungsträger 22 schwenkbar geführt ist, ist dermaßen gestaltet, dass eine durch die Kulissenbahn 30 gebildete, parallel zu den Führungsstangen 28 der Führungsanordnung 19 verlaufende, theoretische Schwenkachse 37 etwa in einer durch die Auflagefläche 5 gebildeten Ebene 38 verläuft. D.h. dass eine gedachte Verbindung zwischen Mittelpunkten der an den gegenüberliegenden Stirnrahmen 29 angeordneten kreisbogenförmig gekrümmten Kulissenbahnen 30 die Schwenkachse 37 bestimmt und etwa in der Ebene 28 verläuft wodurch ein Seitenversatz des Werkzeuges bei einem Verschwenken in eine Winkelstellung gering gehalten wird. Ein Überstand des Sägeblattes 26 über die Auflagefläche 5 hinaus, wie es bei der Bearbeitung eines Werkstückes erforderlich ist, erfordert die durch die Verstellbarkeit der Seitenwangen 6 mögliche symmetrische Positionierung des Druckbalkens 9 - mit seiner schlitzförmigen Öffnung zum Durchtritt des Sägeblattes 26 und damit ein Niederspannen des Werkstückes 3 symmetrisch zur Trennfuge.

Über die Steuerung derartiger Bearbeitungseinrichtungen ist es selbstverständlich möglich, die Verstellungen des Vorrichtungsträgers 22 und der den Druckbalken 9 lagernden Seitenwangen 6 zu koordinieren, z.B. über einen Regelschaltkreis, wonach bei Vorwahl und Einstellung eines jeweils vorgegebenen Schwenkwinkels des Vorrichtungsträgers 22 die entsprechend zugehörige Querverstellung der Seitenwangen 6 und damit des Druckbalkens 9 zwangsweise in die richtige Stellung erfolgt.

Der Ordnung halber sei abschließend darauf hingewiesen, dass zum besseren Verständnis des Aufbaus der Bearbeitungsvorrichtung 1 diese teilweise unmaßstäblich und/oder vergrößert und/oder verkleinert dargestellt wurde.

### Bezugszeichenaufstellung

- 1: Beatbeitungseinrichtung
- 2: Plattenaufteilsäge
- 3: Werkstück
- 4: Maschinengestell
- 5: Auflagerfläche

- 6: Seitenwange
- 7: Verstellantrieb
- 8: Führung
- 9: Druckbalken
- 10: Druckzylinder

- 11: Kolbenstange
- 12: Führung
- 13: Doppelpfeil
- 14: Antriebsanordnung
- 15: Antriebswelle

- 16: Antriebsmotor
- 17: Zahnstange
- 18: Zahnrad
- 19: Führungsanordnung
- 20: Laufwagen

- 21: Vorschubvorrichtung
- 22: Vorrichtungsträger
- 23: Bearbeitungsvornchtung
- 24: Sägeeinrichtung
- 25: Vorritzeinrichtung

- 26: Sägeblatt
- 27: Rollenanordnung
- 28: Führungsstange
- 29: Stirnrahmen
- 30: Kulissenbahn

- 31: Schwenkführung
- 32: Schwenkantrieb
- 33: Spindeltrieb
- 34: Konsole
- 35: Druckspeicher

- 36: Konsole
- 37: Schwenkachse
- 38: Ebene

## Patentansprüche

1. Plattenaufteilsäge zum Aufteilen plattenförmiger Werkstücke mit einem einen Auflagetisch für die Werkstücke ausbildenden Maschinengestell und mit einer im Maschinengestell angeordneten linearen Führungsanordnung und einem über eine Vorschubvorrichtung in der Führungsanordnung verstellbar gelagerten, mit einer Bearbeitungsvorrichtung versehenen Laufwagen und einem in zum Auflagetisch senkrechter Richtung verstellbaren, durch ein in etwa C-formiges Profil gebildeten Druckbalken, mit einer, einer Auflagefläche (5) zugewandten schlitzförmigen Öffnung zum Durchtritt eines Werkzeuges z.B. Sägeblattes, **dadurch gekennzeichnet, dass** die Bearbeitungsvorrichtung (23) im Laufwagen (20) um eine zu einer Verstellrichtung des Laufwagens (20) parallelen und etwa durch eine Auflagefläche (5) des Auflagetisches gebildeten Ebene (38) verlaufenden Schwenkachse (37) verschwenkbar gelagert ist und dass den Druckbalken (9) verstellbar lagernde Seitenwangen (6) mit Verstellantrieben (7) für den Druckbalken (9) in am Maschinengestell (4) senkrecht zur Verstellrichtung des Laufwagens (20) verlaufend angeordneten Führungen (12) verstellbar gelagert sind.

2. Plattenaufteilsäge nach Anspruch 1, **dadurch gekennzeichnet, dass** die Bearbeitungsvorrichtung, insbesondere eine Wägeeinrichtung (24) und eine Vorritzeinrichtung (25), auf einem Vorrichtungsträger (22) angeordnet ist, der in kreisbogenförmig gekrümmten Kulissenbahnen (30) im Laufwagen (20) verstellbar gelagert ist.

3. Plattenaufteilsäge nach Anspruch 1 oder 2, **dadurch gekennzeichnet, dass** die Kulissenbahnen (30) an zu einer Verstellrichtung des Laufwagens (20) senkrecht verlaufenden und zueinander beabstandeten Stirnrahmen (29) des Laufwagens (20) angeordnet sind.

4. Plattenaufteilsäge nach einem oder mehreren der vorhergehenden Ansprüche, **dadurch gekennzeichnet, dass** Mittelpunkte der kreisbogenförmig gekrümmten Kulissenbahnen (30) etwa in der Ebene (38) der Auflagefläche (5) liegen und eine imaginäre Verbindung der Mittelpunkte die Schwenkachse (37) für den Vorrichtungsträger (22) ausbildet.

5. Plattenaufteilsäge nach einem oder mehreren der vorhergehenden Ansprüche, **dadurch gekennzeichnet, dass** ein Schwenkantrieb (32) für den Vorrichtungsträger (22) durch einen Spindeltrieb (33) gebildet ist.

6. Plattenaufteilsäge nach einem oder mehreren der vorhergehenden Ansprüche, **dadurch gekennzeichnet, dass** der Schwenkantrieb (32) durch ein mit einem Druckmedium beaufschlagtes Stellelement gebildet ist.

7. Plattenaufteilsäge nach einem oder mehreren der vorhergehenden Ansprüche, **dadurch gekennzeichnet, dass** zwischen dem Laufwagen (20) und dem Vorrichtungsträger (22) ein Druckspeicher (35) z.B. Feder- oder Gasdruckspeicher etc. für einen Spielausgleich des Schwenkantriebes (32) angeordnet ist.

8. Plattenaufteilsäge nach einem oder mehreren der vorhergehenden Ansprüche, **dadurch gekennzeichnet, dass** im Maschinengestell (4) eine Antriebsanordnung (14) für die Verstellung der Seitenwangen (6) angeordnet ist

9. Plattenaufteilsäge nach einem oder mehreren der vorhergehenden Ansprüche, **dadurch gekennzeichnet, dass** die Antriebsanordnung (14) eine Synchronverstellung der Seitenwangen (6) bewirkt.

10. Plattenaufteilsäge nach einem oder mehreren der vorhergehenden Ansprüche, **dadurch gekennzeichnet, dass** die Antriebsanordnung (14) durch eine mit Zahnstangen (17) der Seitenwangen (6) über Zahnräder (18) in Eingriff stehende Antriebswelle (15) und einen mit der Antriebswelle (15) in Antriebsverbindung stehenden Antriebsmotor (16), insbesondere Schrittschaltmotor, gebildet ist.

11. Plattenaufteilsäge nach einem oder mehreren der vorhergehenden Ansprüche, **dadurch gekennzeichnet, dass** die Antriebsanordnung (14) für die Verstellung der Seitenwangen (6) durch mit einem Druckmedium beaufschlagte Stellelemente gebildet ist.

12. Plattenaufteilsäge nach einem oder mehreren der vorhergehenden Ansprüche, **dadurch gekennzeichnet, dass** die Verstellantriebe (7) für den Druckbalken (9) durch mit einem Drückmedium beaufschlagbare Druckzylinder (10) gebildet sind und Führungen (8) für den Druckbalken (9) durch Kolbenstangen (11) der Druckzylinder (10) gebildet sind.

13. Plattenaufteilsage nach einem oder mehreren der vorhergehenden Ansprüche, **dadurch gekennzeichnet, dass** ein Schwenkwinkel des Vorrichtungsträgers (22) größer 45° ist.

14. Plattenaufteilsäge nach einem oder mehreren der vorhergehenden Ansprüche, **dadurch gekennzeichnet, dass** die Führungen (8) der Seitenwangen (6) durch Gleit-, Rollen- oder Kugelfuhrungen gebildet sind.

15. Plattenaufteilsäge nach einem oder mehreren der vorhergehenden Ansprüche, **dadurch gekennzeichnet, dass** über eine Regelschaltung in der Steuereinrichtung die Antriebsanordnung (14) für die Seitenwangen (6) zur Vornahme einer Verstellung in Abhängigkeit einer vom Schwenkantrieb (32) ausgeführten Verschwenkung des Vorrichtungsträgers (22) beaufschlagt wird.

16. Plattenaufteilsäge nach einem oder mehreren der vorhergehenden Anspruche, **dadurch gekennzeichnet, dass** die Verstellantriebe für den Druckbalken (9) für die Vorgabe unterschiedlicher Verstellwege ausgebildet sind.

## Claims

1. A panel divider saw for dividing panel-shaped workpieces, having a machine frame forming a supporting table for the workpieces and having a linear guide arrangement, arranged in the machine frame, and a travelling carriage, adjustably mounted in the guide arrangement via a feed device and provided with a machining device, and a pressure beam, adjustable in a direction perpendicular to the supporting table and formed by a substantially C-shaped section, with a slot-shaped opening, facing a supporting surface (5), for passage of a tool, e.g. saw blade, **characterised in that** the machining device (23) is pivotably mounted in the travelling carriage (20) about a pivot axis (37) which runs in a plane (38) which is parallel to an adjustment direction of the travelling carriage (20) and which is substantially formed by a supporting surface (5) of the supporting table, and **in that** lateral cheeks (6), adjustably bearing the pressure beam (9), with adjustment drives (7) for the pressure beam (9) are adjustably mounted in guides (12) arranged on the machine frame (4) so as to run perpendicularly to the adjustment direction of the travelling carriage (20).

2. A panel divider saw according to claim 1, **characterised in that** the machining device, in particular a sawing device (24) and a pre-scoring device (25), is arranged on a device bearer (22) adjustably mounted in the travelling carriage (20) in slotted-link tracks (30) curved in a circular arc shape.

3. A panel divider saw according to claim 1 or 2, **characterised in that** the slotted-link tracks (30) are arranged on end frames (29) of the travelling carriage (20), which end frames (29) are spaced apart and run perpendicularly to an adjustment direction of the travelling carriage (20).

4. A panel divider saw according to one or more of the preceding claims, **characterised in that** centre points of the slotted-link tracks (30), curved in a circular arc shape, lie substantially in the plane (38) of the supporting surface (5) and an imaginary connection of the centre points forms the pivot axis (37) for the device bearer (22).

5. A panel divider saw according to one or more of the preceding claims, **characterised in that** a pivot drive (32) for the device bearer (22) is formed by a spindle drive (33).

6. A panel divider saw according to one or more of the preceding claims, **characterised in that** the pivot drive (32) is formed by an adjusting element acted upon by a pressure medium.

7. A panel divider saw according to one or more of the preceding claims, **characterised in that** between the travelling carriage (20) and the device bearer (22) there is arranged a pressure storage device (35), e.g. spring or gas pressure storage device etc., for play compensation of the pivot drive (32).

8. A panel divider saw according to one or more of the preceding claims, **characterised in that** a drive arrangement (14) for adjustment of the lateral cheeks (6) is arranged in the machine frame (4).

9. A panel divider saw according to one or more of the preceding claims, **characterised in that** the drive arrangement (14) effects a synchronous adjustment of the lateral cheeks (6).

10. A panel divider saw according to one or more of the preceding claims, **characterised in that** the drive arrangement (14) is formed by a drive shaft (15) engaging racks (17) of the lateral cheeks (6) via toothed wheels (18) and by a drive motor (16), in particular a stepper motor, in a drive connection with the drive shaft (15).

11. A panel divider saw according to one or more of the preceding claims, **characterised in that** the drive arrangement (14) for the adjustment of the lateral cheeks (6) is formed by adjustment elements acted upon by a pressure medium.

12. A panel divider saw according to one or more of the preceding claims, **characterised in that** the adjustment drives (7) for the pressure beam (9) are formed by pressure cylinders (10) able to be acted upon by a pressure medium and guides (8) for the pressure beam (9) are formed by piston rods (11) of the pressure cylinders (10).

13. A panel divider saw according to one or more of the preceding claims, **characterised in that** a pivot angle of the device bearer (22) is greater than 45°.

14. A panel divider saw according to one or more of the preceding claims, **characterised in that** the guides (8) of the lateral cheeks (6) are formed by sliding, roller or ball guides.

15. A panel divider saw according to one or more of the preceding claims, **characterised in that** the drive arrangement (14) for the lateral cheeks (6) is via a regulating circuit in the control device acted upon to carry out an adjustment dependent on a pivoting, carried out by the pivot drive (32), of the device bearer (22).

16. A panel divider saw according to one or more of the preceding claims, **characterised in that** the adjustment drives for the pressure beam (9) are designed for the pre-setting of different adjustment paths.

## Revendications

1. Scie à déligner pour déligner des pièces en forme de plateaux, comportant un bâti qui constitue une table pour les pièces, un dispositif de guidage linéaire disposé dans le bâti, un chariot qui peut se déplacer au moyen d'un dispositif d'avance dans le dispositif de guidage et doté d'un dispositif de traitement ainsi qu'une poutre de pression pouvant se déplacer perpendiculairement à la table et formée d'un profilé approximativement en force de C, comportant une ouverture en forme de fente dirigée vers une surface d'appui (5) pour le passage d'un outil, par exemple d'une lame de scie,
**caractérisée en ce que**
le dispositif de traitement (23) dans le chariot (20) est disposé de manière à pouvoir pivoter autour d'un axe de pivotement (37) parallèle à un sens de déplacement du chariot (20) et traversant approximativement un plan (38) formé par la surface d'appui (5) de la table, et **en ce que**
des flasques (6), logeant de manière mobile la poutre de pression (9), équipés de mécanismes de commande (7) pour le déplacement de la barre de pression (9), sont disposés, dans des guides 12) disposés dans le bâti (4) perpendiculairement au sens de déplacement du chariot (20).

2. Scie à déligner selon la revendication 1,
**caractérisée en ce que**
le dispositif de traitement, en particulier un dispositif de sciage (24) et un inciseur (25), sont disposés sur un porte-dispositifs (22) pouvant se déplacer dans des coulisseaux (30) courbes en forme d'arc de cercle dans le chariot (20).

3. Scie à déligner selon la revendication 1 ou la revendication 2,
**caractérisée en ce que**
les coulisseaux (30) sont disposés sur un cadre frontal (29) du chariot (20) perpendiculaire au sens de déplacement du chariot (20) et distant de celui-ci.

4. Scie à déligner selon l'une quelconque ou plusieurs des revendications précédentes,
**caractérisée en ce que**
les points centraux des coulisseaux (30) courbes en forme d'arc de cercle se trouvent approximativement sur le plan (38) de la surface d'appui (5) et une liaison imaginaire des points centraux forme l'axe de pivotement (37) du porte-dispositifs (22).

5. Scie à déligner selon l'une quelconque ou plusieurs des revendications précédentes,
**caractérisée en ce qu'**
un vérin oscillant (32) destiné au porte-dispositifs (22) est constitué d'une commande à broche (33).

6. Scie à déligner selon l'une quelconque ou plusieurs des revendications précédentes,
**caractérisée en ce que**
le vérin oscillant (32) est formé par un actionneur soumis à un fluide sous pression.

7. Scie à déligner selon l'une quelconque ou plusieurs des revendications précédentes,
**caractérisée en ce que**,
entre le chariot (20) et le porte-dispositifs (22), se trouve un accumulateur hydraulique (35), par exemple un accumulateur à ressorts ou un accumulateur hydropneumatique (35), etc., afin de compenser le jeu du vérin oscillant (32).

8. Scie à déligner selon l'une quelconque ou plusieurs des revendications précédentes,
**caractérisée en ce que**
le bâti (4) abrite un dispositif d'entraînement (14) pour déplacer les flasques (6).

9. Scie à déligner selon l'une quelconque ou plusieurs des revendications précédentes,
**caractérisée en ce que**
le dispositif d'entraînement (14) provoque un déplacement synchrone des flasques (6).

10. Scie à déligner selon l'une quelconque ou plusieurs des revendications précédentes,
**caractérisée en ce que**
le dispositif d'entraînement (14) est constitué d'un arbre menant (15) en prise avec des crémaillères (17) des flasques (6) par l'intermédiaire de roues dentées (18) et d'un moteur d'entraînement (16) en liaison d'entraînement avec l'arbre menant (15), par exemple un moteur pas à pas.

11. Scie à déligner selon l'une quelconque ou plusieurs des revendications précédentes,
**caractérisée en ce que**
le dispositif d'entraînement (14) destiné au déplacement des flasques (6) est constitué d'actionneurs soumis à un fluide sous pression.

12. Scie à déligner selon l'une quelconque ou plusieurs des revendications précédentes,
**caractérisée en ce que**
les mécanismes de commande (7) pour le déplacement de la poutre de pression (9) sont constitués d'un vérin hydraulique (10) soumis à un fluide sous pression et les guides (8) destinés à la poutre de pression (9) sont constitués de tiges de piston (11) des vérins hydrauliques (10).

13. Scie à déligner selon l'une quelconque ou plusieurs des revendications précédentes,
**caractérisée en ce qu'**
un angle de pivotement du porte-dispositifs (22) est supérieur à 45°.

14. Scie à déligner selon l'une quelconque ou plusieurs des revendications précédentes,
**caractérisée en ce que**
les guides (8) des flasques (6) sont constitués de coulisses, de glissières à galets ou à billes.

15. Scie à déligner selon l'une quelconque ou plusieurs des revendications précédentes,
**caractérisée en ce que**
le dispositif d'entraînement (14) des flasques (6) est alimenté par l'intermédiaire d'un combinateur dans le dispositif de commande afin de procéder à un déplacement en fonction d'un pivotement du portedispositifs (22) exécuté par le vérin oscillant (32).

16. Scie à déligner selon l'une quelconque ou plusieurs des revendications précédentes,
**caractérisée en ce que**
les mécanismes de commande pour le déplacement de la barre de pression (9) sont conçus pour prédéfinir les différents trajets de déplacement.
